# EUROPÄISCHE PATENTSCHRIFT

(11) **EP 3 408 564 B1**
(45) Veröffentlichungstag und Bekanntmachung des Hinweises auf die Patenterteilung: **11.05.2022**
(21) Anmeldenummer: 17700050.2
(22) Anmeldetag: 04.01.2017
(51) Int. Cl.: F16H 61/00, F16H 63/30, F16H 61/30

(54) **SCHALTANORDNUNG FÜR EIN KRAFTFAHRZEUGGETRIEBE**
SHIFT ASSEMBLY FOR A MOTOR VEHICLE TRANSMISSION
DISPOSITIF DE CHANGEMENT DE VITESSE POUR TRANSMISSION DE VÉHICULE AUTOMOBILE

(30) Priorität: 29.01.2016 DE 102016101591
(43) Veröffentlichungstag der Anmeldung: 05.12.2018
(73) Patentinhaber: Magna PT B.V. & Co. KG, 74199 Untergruppenbach (DE)
(72) Erfinder: RÜHLE, Günter, 74369 Löchgau (DE); ABELE, Christian, 71111 Waldenbuch (DE); CERMAK, Peter, 74074 Heilbronn (DE)
(74) Vertreter: Rausch, Gabriele
(86) Internationale Anmeldenummer: PCT/EP2017/050116
(87) Internationale Veröffentlichungsnummer: WO 2017/129382

(56) Entgegenhaltungen:
- EP-A2- 2 543 891
- DE-A1- 3 621 031
- DE-A1-102005 029 962
- DE-A1-102010 032 668
- US-A- 4 653 352

## Beschreibung

Die vorliegende Erfindung betrifft eine Schaltanordnung für ein Kraftfahrzeuggetriebe, mit einem Gehäuse, das eine Längsachse definiert, mit wenigstens einer ersten und einer zweiten Schaltstange, die zum Ein- und Auslegen von jeweiligen zugeordneten Gangstufen axial verschieblich in Bezug auf das Gehäuse gelagert sind, und mit einer Hydraulikanordnung, die wenigstens einen ersten und einen zweiten Hydraulikzylinder aufweist, wobei der erste Hydraulikzylinder dazu ausgelegt ist, die erste Schaltstange in wenigstens einer axialen Richtung axial zu verschieben, wobei der zweite Hydraulikzylinder dazu ausgelegt ist, die zweite Schaltstange in wenigstens einer axialen Richtung axial zu verschieben, wobei der erste und der zweite Hydraulikzylinder an einem gemeinsamen Hydraulikzylinderträger festlegt sind.

Ferner betrifft die vorliegende Erfindung ein Kraftfahrzeuggetriebe mit einem

Getriebegehäuse und mit wenigstens zwei axial versetzt angeordneten Radsätzen zum Ein- und Auslegen von Gangstufen sowie mit einer Schaltanordnung der oben beschriebenen Art.

Eine Schaltanordnung der oben beschriebenen Art ist beispielsweise bekannt aus dem Dokument WO 2006/131287 A1.

Auf dem Gebiet der automatisierten Kraftfahrzeuggetriebe sind verschiedene Arten von Aktuatoriken zum Betätigen von Schaltkupplungen bekannt. Beispielsweise können die Aktuatoriken Elektromotoren beinhalten, oder elektromagnetische Aktuatoren.

In vielen Fällen beinhalten automatisierte Fahrzeuggetriebe jedoch eine Hydraulikanordnung, die beispielsweise auch zum Betätigen von einer Kupplungsanordnung eines Antriebsstranges verwendet wird. In vielen Fällen sind Aktuatoren zum Betätigen von Schaltkupplungen daher durch Hydraulikzylinder gebildet.

Bei Kraftfahrzeuggetrieben, die in Vorgelegebauweise ausgebildet sind, werden Gangstufen in der Regel durch Radsätze abgebildet, die jeweils ein Losrad beinhalten, das drehbar an einer Welle gelagert ist und das mittels einer Schaltkupplung drehfest mit der Welle verbindbar ist, um eine zugeordnete Gangstufe einzurichten.

In der Regel sind dabei zwei Schaltkupplungen für zwei unterschiedliche Gangstufen zu einem Schaltkupplungspaket integriert. Die Schaltkupplungen eines Schaltkupplungspaketes lassen sich in der Regel mittels einer Schaltmuffe betätigen, in die ein Schaltglied wie eine Schaltgabel eingreift. Die Schaltglieder zum Betätigen von Schaltkupplungspaketen sind häufig an Schaltstangen festgelegt, die auch als Schaltschienen bezeichnet werden können und die parallel zu einer Längsachse des Getriebes ausgerichtet sind.

Manche Schaltanordnungen beinhalten dabei ferner eine Schaltwelle, die einen Schaltfinger aufweist, der je nach einer Dreh- oder nach einer Axialposition der Welle mit einer der Schaltstangen gekoppelt ist. Eine solche Schaltwelle kann beispielsweise mittels eines ersten Aktuators verdreht und mittels eines zweiten Aktuators axial versetzt werden.

Die Anzahl der zum Ein- und Auslegen von Gangstufen erforderlichen Aktuatoren ist hierbei gering.

Aus dem eingangs genannten Dokument WO 2006/131287 A1 ist es bekannt, jeder Schaltstange einen eigenen Hydraulikzylinder zuzuordnen, der zu diesem Zweck als doppeltwirkender Zylinder ausgebildet ist, die Schaltstange also in beiden axialen Richtungen betätigen kann. Das Dokument WO 2006/131287 A1 schlägt dabei vor, die Hydraulikzylinder an einer Innenseite eines vormontierten Mechatronik-Moduls anzuordnen, das parallel zu den Wellen an dem Getriebegehäuse angebracht ist, und zwar eine Öffnung des Getriebegehäuses abdeckt. Das Mechatronik-Modul kann daher vorab, also vor der Montage an dem Getriebegehäuse geprüft werden. Das Mechatronik-Modul beinhaltet ferner Magnetventile und Sensorik und soll daher die Anzahl der internen und externen elektrischen Steckverbindungen sowie Gehäusedurchführungen verringern.

Bei anderen Schaltanordnungen werden Hydraulikzylinder zum Betätigen von Schaltstangen in das Getriebegehäuse integriert, derart, dass das Getriebegehäuse ein Zylindergehäuse des Hydraulikzylinders bildet, innerhalb dessen ein Kolben geführt ist. Bei derartigen Getriebegehäusen werden hohe Anforderungen an das Gehäuse gestellt, insbesondere, wenn dieses als Gussteil ausgebildet ist, da in diesem Fall die Porosität möglichst gering sein sollte. Zudem erfordert diese Art von Schaltanordnung einen erhöhten Bearbeitungsaufwand an dem Getriebegehäuse, zum Einbringen von Bohrungen oder Kanälen direkt in das Gehäuse (sei es durch nachträgliche Bohrungen oder durch Eingießen von Kanälen).

Die Schaltstangen werden an ihren entgegengesetzten Enden in der Regel an dem Getriebegehäuse gelagert, so dass sie radial im Wesentlichen fest gelagert sind, jedoch axial in Grenzen verschieblich sind, um auf diese Weise die verschiedenen Gangpositionen einer Schaltkupplung darstellen zu können.

Eine weitere elektrohydraulische Steuervorrichtung ist aus dem Dokument DE 10 2010 032 668 A1 bekannt. Hier sollen Gangstellerkolben von Hydraulikzylindern quer, insbesondere senkrecht zu einer Hauptebene von Steuerplatten eines Hydraulikmoduls angeordnet sein.

Aus der DE10 2005 029 962 A1 ist ein Doppelkupplungsgetriebe mit einem Aufnahmeelement als Lager für die Getriebewellen und zum Anbringen von hydraulischen Aktuatoren für Schaltschienen bekannt. Aktuatoren betätigen die Schaltschienen, die sich links und rechts vom Aktuator erstrecken.

Aus der US 4 653 352 B1 ist ein Automatikgetriebe bekannt, das Aktuatoren für die Auswahl der Gänge des Automatikgetriebes aufweist. Mit den Aktuatoren, die in Bohrungen des Gehäuses des Getriebes angebracht ist, werden Schaltstangen betätigt. Aus der DE10 2010 032 668 A1 ist ein Hydraulikmodul für ein Doppelkupplungsgetriebe bekannt.

Generell haben die oben genannten Schaltanordnungen ein relativ hohes Gewicht. Es ist daher eine Aufgabe der Erfindung, eine verbesserte Schaltanordnung für ein Kraftfahrzeuggetriebe sowie ein verbessertes Kraftfahrzeuggetriebe mit einer Schaltanordnung anzugeben, wobei wenigstens eines der oben genannten Probleme gelöst oder verringert wird.

Die obige Aufgabe wird bei der eingangs genannten Schaltanordnung durch die Merkmale des kennzeichnenden Teils des Anspruchs 1 gelöst.

Ferner wird die obige Aufgabe gelöst durch ein Fahrzeuggetriebe mit einem Getriebegehäuse, mit wenigstens zwei axial versetzt angeordneten Radsätzen zum Ein-und Auslegen von Gangstufen und mit einer erfindungsgemäßen Schaltanordnung. Schließlich wird die obige Aufgabe gelöst durch ein Kraftfahrzeuggetriebe mit einem Getriebegehäuse und mit einer Mehrzahl von darin angeordneten Radsätzen, die sich insgesamt über eine Radsatzlänge erstrecken, und mit einer Schaltanordnung der erfindungsgemäßen Art, wobei der erste und der zweite Hydraulikzylinder koaxial zu ihrer jeweiligen Schaltstange angeordnet sind und wobei der Hydraulikzylinderträger axial gesehen etwa in der Mitte der Radsatzlänge angeordnet ist.

Während der Stand der Technik generell davon ausgeht, dass sich die Schaltstangen des Kraftfahrzeuggetriebes im Wesentlichen über die gesamte axiale Länge des Getriebegehäuses erstrecken und an axial gegenüberliegenden Wänden des Getriebegehäuses gelagert sind, lehrt die vorliegende Erfindung, einen Hydraulikzylinderträger vorzusehen, von dem aus sich Schaltstangen ausschließlich in entgegengesetzte Richtungen erstrecken, was impliziert, dass der Hydraulikzylinderträger axial gesehen zwischen wenigstens zwei Schaltkupplungen angeordnet ist, die von unterschiedlichen Schaltstangen betätigt werden. Hierdurch kann die axiale Länge der jeweiligen Schaltstangen verringert werden, so dass sich eine Gewichtseinsparung ergibt.

Die Hydraulikzylinder sind vorzugsweise koaxial zu den Schaltstangen angeordnet. Die erste und die zweite Schaltstange überschneiden sich in axialer Richtung nicht. Der erste und der zweite Hydraulikzylinder sind jeweils vorzugsweise als doppelt wirkende Hydraulikzylinder ausgebildet. Der Hydraulikzylinderträger erstreckt sich vorzugsweise quer zu der Längsachse, wobei die Hydraulikzylinder vorzugsweise so daran angeordnet sind, dass sie sich in axialer Richtung vorzugsweise überschneiden.

Der Hydraulikzylinderträger kann mit den daran festgelegten Hydraulikzylindern als eine vormontierbare und prüfbare Einheit ausgeführt werden. Der Hydraulikzylinderträger kann aus einem anderen Material als das Getriebegehäuse hergestellt sein, insbesondere aus einem leichteren Material als das Getriebegehäuse, was wiederum zu einer gewichtsreduzierten Schaltanordnung führt.

Zudem ergeben sich geringere Anforderungen hinsichtlich der Porosität an das Getriebegehäuse. Das Getriebegehäuse kann ferner hinsichtlich der zu verwendenden Gussform und/oder hinsichtlich der durchzuführenden Bearbeitungsschritte weniger komplex ausgebildet sein

Gemäß einer bevorzugten Ausführungsform der erfindungsgemäßen Schaltanordnung ist der Hydraulikzylinderträger dazu ausgebildet, in einem Getriebegehäuse des Fahrzeuggetriebes befestigt zu werden.

Bei dieser Variante bildet der Hydraulikzylinderträger folglich keinen Teil des Getriebegehäuses, sondern ist vorzugsweise vollständig im Inneren des Getriebegehäuses angeordnet. Bei dieser Ausführungsform haben potentielle Leckagen von Hydraulikzylindern keine Auswirkungen auf die Umgebung des Fahrzeuggetriebes.

Der Hydraulikzylinderträger ist bei dieser Variante vorzugsweise als separat ausgebildetes Bauteil ausgebildet, das vorzugsweise überwiegend aus einem leichteren Material als das Material des Getriebegehäuses ausgebildet ist. Das Getriebegehäuse bildet vorzugsweise zumindest abschnittsweise ein Gehäuse der Schaltanordnung, in Bezug auf das die Schaltstangen gelagert sind.

Gemäß einer weiteren bevorzugten Ausführungsform weisen die erste und die zweite Schaltstange jeweils zwei axiale Enden auf und sind jeweils im Bereich von einem ihrer axialen Enden fest mit einer Kolbenanordnung ihres zugeordneten Hydraulikzylinders verbunden, wobei die erste und die zweite Schaltstange im Bereich ihres jeweiligen anderen axialen Endes dazu ausgebildet sind, um an einem Getriebegehäuse radial fest und axial verschieblich gelagert zu werden.

Die Schaltanordnung kann folglich mit den Schaltstangen vormontiert werden, obgleich es auch möglich ist, die Schaltstangen nach der Montage des Hydraulikzylinderträgers in dem Getriebegehäuse mit den jeweiligen Kolbenanordnungen zu verbinden. Die Verbindung mit einer Kolbenanordnung bedeutet, dass die Schaltstange im Bereich ihres ersten axialen Endes mit dem Kolben oder einer damit verbundenen Kolbenstange verbunden werden kann.

Die axiale Länge der Schaltstangen ist vorzugsweise kleiner gleich der Hälfte der Radsatzlänge des Kraftfahrzeuggetriebes.

Von besonderem Vorteil ist es jedoch, dass der Hydraulikzylinderträger als Aktuatorgehäuse ausgebildet ist, das wenigstens einen Fluidkanal aufweist, der im Inneren des Aktuatorgehäuses mit einem Anschluss des ersten und/oder des zweiten Hydraulikzylinders verbunden ist und der außen an dem Aktuatorgehäuse mit einer Fluidversorgungseinrichtung der Hydraulikanordnung verbindbar ist.

Bei dieser Ausführungsform bildet der Hydraulikzylinderträger ein vormontierbares Hydraulikmodul in Form des Aktuatorgehäuses, bei dem wenigstens ein Hydraulikzylinder über einen Fluidkanal im Inneren des Aktuatorgehäuses ansteuerbar ist. Folglich ist der Anschluss des Hydraulikzylinders an eine Fluidversorgungseinrichtung, die beispielsweise eine Ventilanordnung beinhaltet, deutlich vereinfacht, da im Inneren des Getriebegehäuses keine aufwändigen Hydraulikleitungsanordnungen verlegt werden müssen.

Erfindungsgemäß ist es ferner, dass der Hydraulikzylinderträger als Aktuatorgehäuse ausgebildet ist, das ein erstes Teilgehäuse und ein zweites Teilgehäuse aufweist, die über eine Verbindungsebene miteinander verbunden sind, die quer zu der Längsachse ausgerichtet ist.

Bei dieser Ausführungsform kann das Aktuatorgehäuse konstruktiv einfach realisiert werden, nach der Art eines Hydraulikmoduls. Ferner können die Teilgehäuse konstruktiv und gegebenenfalls gusstechnisch einfach realisiert werden, da die im Inneren vorhandenen Kanäle gebildet werden können, indem die Teilgehäuse aneinander montiert werden.

Gemäß einer besonders bevorzugten Ausführungsform ist dabei zwischen dem ersten und dem zweiten Teilgehäuse zumindest abschnittsweise eine Zwischenplatte angeordnet, wobei das erste und/oder das zweite Teilgehäuse und die Zwischenplatte so ausgebildet sind, dass zwischen dem ersten Teilgehäuse und der Zwischenplatte und/oder zwischen dem zweiten Teilgehäuse und der Zwischenplatte wenigstens ein Fluidkanal ausgebildet ist.

Bei dieser Ausführungsform lassen sich auch komplexere Kanalanordnungen auf konstruktiv vergleichsweise einfache Art und Weise realisieren. Die Zwischenplatte kann an geeigneten Orten mit axialen Durchbrechnungen versehen sein, um an bestimmten Stellen das erste Teilgehäuse mit dem zweiten Teilgehäuse fluidisch zu verbinden.

Der Hydraulikzylinderträger bzw. das Aktuatorgehäuse kann aus Kunststoff hergestellt sein, da der Hydraulikzylinderträger nur Schaltkräfte aufnehmen muss und keine Kräfte aus den Radsätzen. In vielen Fällen ist es jedoch bevorzugt, wenn der Hydraulikzylinderträger aus einem Metallgussmaterial hergestellt ist. In diesen Fällen ist es bevorzugt, wenn der erste und/oder der zweite Hydraulikzylinder vorzugsweise eine Führungsbuchse aus einem Kunststoffmaterial aufweist, die in eine Axialöffnung in dem Hydraulikzylinderträger eingesetzt ist.

Bei dieser Ausführungsform kann das Metallgussmaterial mit einer relativ hohen Porosität bereitgestellt werden. In vielen Fällen ist es hinreichend, die notwendige Dichtigkeit in dem Hydraulikzylinder über die Führungsbuchse aus Kunststoffmaterial zu realisieren.

Die Axialöffnung in dem Hydraulikzylinderträger kann durch das erste und/oder durch das zweite Teilgehäuse gebildet sein. Eine solche Axialöffnung kann bei der Herstellung von dem Hydraulikzylinderträger axial durchgehend ausgebildet sein, wobei ein axiales Ende beispielsweise mittels eines Stopfens verschlossen wird und wobei aus dem anderen axialen Ende eine Kolbenstange abgedichtet heraustritt, die mit einer Schaltstange zu verbinden ist.

Ferner ist es insgesamt bevorzugt, wenn die Hydraulikanordnung ein Hydraulikmodul aufweist, an dem eine Fluidversorgungseinrichtung und/oder eine Ventilanordnung hiervon ausgebildet ist, und zwar zum Erzeugen eines Steuerdruckes für den ersten und/oder den zweiten Hydraulikzylinder, wobei das Hydraulikmodul sich in axialer Richtung zumindest teilweise mit dem Hydraulikzylinderträger überschneidet.

Das Hydraulikmodul ist dabei in der Regel entlang einer Ebene ausgerichtet, die parallel versetzt zu den Wellen des Fahrzeuggetriebes ausrichtbar ist.

Bei dem erfindungsgemäßen Kraftfahrzeuggetriebe ist es bevorzugt, wenn das Getriebegehäuse eine sich quer zu der Längsachse erstreckende Lagerwand aufweist, an der der Hydraulikzylinderträger festgelegt ist.

Die Lagerwand kann als von dem Getriebegehäuse separat ausgebildete Lagerplatte ausgebildet sein, kann jedoch auch einstückig mit einem zentralen Abschnitt des Getriebegehäuses ausgebildet sein, beispielsweise mit einem Zwischengehäuse.

Der Hydraulikzylinderträger ist dabei vorzugsweise auf einer axialen Seite der Lagerwand festgelegt, und zwar vorzugsweise auf der einem Eingang des Kraftfahrzeuggetriebes zugewandten axialen Seite. Die Lagerwand kann an den Stellen, an denen Hydraulikzylinder für Schaltstangen auf der anderen axialen Seite vorgesehen sind, axiale Durchbrechungen aufweisen.

Ferner ist es bei dem erfindungsgemäßen Kraftfahrzeuggetriebe bevorzugt, wenn das Kraftfahrzeuggetriebe ein Doppelkupplungsgetriebe mit einem ersten Teilgetriebe, das ungerade Gangstufen beinhaltet, und mit einem zweiten Teilgetriebe ist, das gerade Gangstufen beinhaltet, wobei der Hydraulikzylinderträger axial zwischen den zweite Teilgetrieben angeordnet ist.

In sämtlichen oben genannten Varianten ist der Hydraulikzylinderträger vorzugsweise in einem mittleren Bereich der Radsatzlänge angeordnet, derart, dass die axialen Längen der zu verwendenden Schaltstangen relativ kurz sind, so dass sich eine hohe Gewichtseinsparung ergibt. Ferner kann der Hydraulikzylinderträger bzw. das Aktuatorgehäuse als vormontierbare und prüfbare Einheit ausgeführt werden. Der Hydraulikzylinderträger bzw. das Aktuatorgehäuse kann, insbesondere bei einem integrierten Hydraulikzylinder aus zum Beispiel Kunststoff, ein gegen Porosität robustes Bauteil sein. Das Getriebegehäuse kann hinsichtlich der zu verwendenden Gussform und hinsichtlich der zu verwendenden Bearbeitungsschritte weniger komplex realisiert werden. Potentielle Leckagen in den Hydraulikzylindern haben keine Auswirkung auf die Umgebung des Getriebes. Auf den Hydraulikzylinderträger wirken nur Schaltkräfte und keine Kräfte aus den Radsätzen, so dass der Hydraulikzylinderträger möglicherweise aus Materialien mit geringerer Dichte als das Material des Getriebegehäuses hergestellt werden kann.

Das Getriebegehäuse kann mit geringen Anforderungen an die Porosität hergestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Längsschnittansicht einer Ausführungsform eines Kraftfahrzeuggetriebes mit einer erfindungsgemäßen Schaltanordnung;
Fig. 2 eine schematische Längsschnittansicht durch einen Teil eines Kraftfahrzeuges mit einem Teil einer erfindungsgemäßen Schaltanordnung;
Fig. 3 eine schematische Längsschnittansicht durch ein Kraftfahrzeuggetriebe mit einer erfindungsgemäßen Ausführungsform einer Schaltanordnung;
Fig. 4 eine perspektivische Ansicht einer weiteren Ausführungsform einer erfindungsgemäßen Schaltanordnung;
Fig. 5 eine weitere perspektivische Ansicht der Schaltanordnung der Fig. 4;
Fig. 6 eine perspektivische Ansicht einer Schaltstange mit einem zugeordneten Hydraulikzylinder; und
Fig. 7 eine axiale Schnittansicht durch einen Hydraulikzylinderträger in Form eines Aktuatorgehäuses mit einem Hydraulikzylinder.

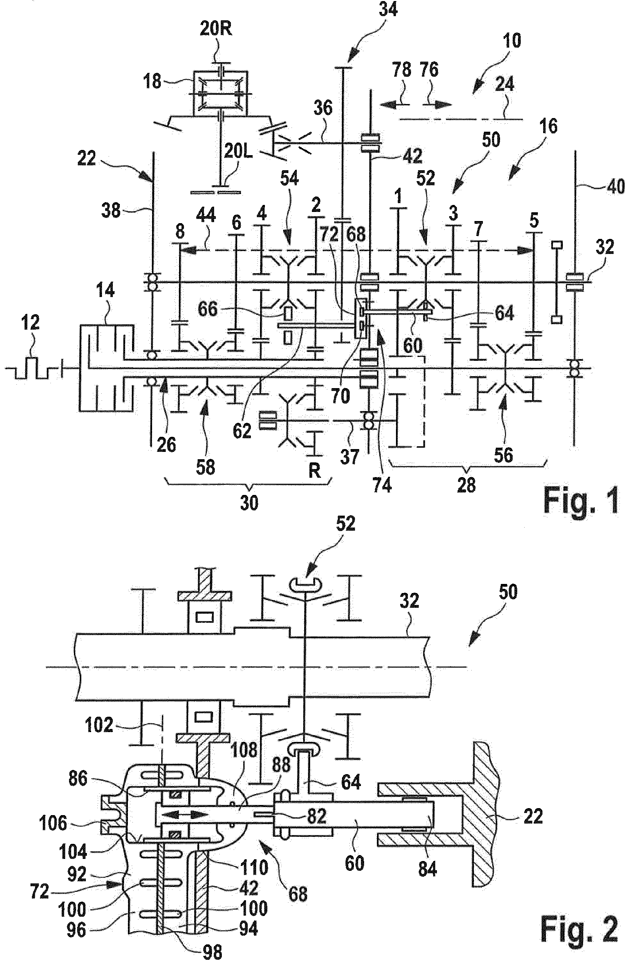

Ein Antriebsstrang für ein Kraftfahrzeug ist in Fig. 1 schematisch dargestellt und generell mit 10 bezeichnet.

Der Antriebsstrang 10 beinhaltet einen Antriebsmotor 12 wie einen Verbrennungsmotor oder eine Hybrid-Antriebseinheit. Ein Ausgang des Antriebsmotors 12 ist mit dem Eingang einer Kupplungsanordnung 14 verbunden, die, wie dargestellt, als Doppelkupplungsanordnung ausgebildet sein kann, die jedoch auch als Einzelkupplung ausgebildet sein kann. Ein Ausgang der Kupplungsanordnung 14 ist mit einem Eingang eines Stufengetriebes 16 verbunden. Ein Ausgang des Stufengetriebes 16 ist mit einem Differential 18 verbunden, mittels dessen Antriebsleistung auf angetriebene Räder 20L, 20R verteilbar ist.

Das Stufengetriebe 16 weist ein Getriebegehäuse 22 auf, das entlang einer Längsachse 24 ausgerichtet ist. Ferner beinhaltet das Stufengetriebe 16 eine Eingangswellenanordnung 26, die vorliegend eine Hohlwelle und eine Innenwelle beinhaltet. Das Stufengetriebe 16 ist als Doppelkupplungsgetriebe ausgebildet und beinhaltet ein erstes Teilgetriebe 28, das die ungeraden Gangstufen aufweist, sowie ein zweites Teilgetriebe 30, das die geraden Gangstufen des Stufengetriebes 16 aufweist. Das Stufengetriebe weist acht Vorwärtsgangstufen 1-8 auf und eine Rückwärtsgangstufe R.

Parallel zu der Eingangswellenanordnung 26 ist eine Vorgelegewelle 32 an dem Getriebegehäuse 22 drehbar gelagert. Die Gangstufen sind durch jeweilige Radsätze abgebildet, die jeweils wenigstens ein Losrad aufweisen, das mit einer zugeordneten Welle (entweder einer Welle der Eingangswellenanordnung oder der Vorgelegewelle) über eine Schaltkupplung verbindbar ist, um die zugeordnete Gang stufe einzulegen.

Die Vorgelegewelle 32 ist über einen Konstanten-Abtriebsradsatz 34 mit einer Ausgangswelle 36 verbunden, die parallel zu der Vorgelegewelle 32 ausgerichtet ist und die über einen Kegeltrieb mit einem Eingangsglied des Differentials 18 verbunden ist.

Die Rückwärtsgangstufe R wird über eine parallel zu der Eingangswellenanordnung 26 und parallel zu der Vorgelegewelle 32 angeordnete Rückwärtsgangwelle 37 realisiert.

Das Getriebegehäuse 22 weist eine eingangsseitige erste Gehäusewand 38 und eine dem Getriebeeingang gegenüberliegende zweite Gehäusewand 40 auf. Zwischen den Gehäusewänden 38, 40 ist eine Lagerwand 42 angeordnet. Die Lagerwand 42 ist zwischen dem ersten und dem zweiten Teilgetriebe 28, 30 angeordnet. An der Lagerwand 42 sind die genannten Wellen zumindest teilweise radial und/oder axial gelagert. Der Konstanten-Abtriebsradsatz ist in axialer Richtung zwischen der Lagerwand 42 und den Radsätzen des zweiten Teilgetriebes 30 angeordnet.

Das Kraftfahrzeuggetriebe 16 ist insbesondere für Kraftfahrzeuge in Mittelmotor-Bauweise oder in Längsbauweise realisiert, wobei die angetriebenen Räder 20L, 20R vorzugsweise Hinterräder des Kraftfahrzeuges sind.

Die Radsätze der Vorwärtsgangstufen des Stufengetriebes 16 erstrecken sich über eine in Fig. 1 bei 44 gestrichelt dargestellte Radsatzlänge 44. Die Lagerwand 42 ist in einem mittleren Bereich der Radsatzlänge 44 angeordnet.

Das Kraftfahrzeuggetriebe 16 beinhaltet ferner eine Schaltanordnung 50, mittels der die Gangstufen des Kraftfahrzeuggetriebes automatisiert ein- und ausgelegt werden können.

Die Schaltanordnung 50 weist ein erstes Schaltkupplungspaket 52 für die Gangstufen 1, 3 auf, sowie ein zweites Schaltkupplungspaket 54 für die Gangstufen 2, 4. Die Schaltanordnung 50 beinhaltet ferner ein Schaltkupplungspaket 56 für die Gangstufen 7, 5 und ein Schaltkupplungspaket 58 für die Gangstufen 8, 6.

Jedem der Schaltkupplungspakete 52 bis 58 ist eine Schaltstange zugeordnet. In Fig. 1 ist aus Gründen einer übersichtlicheren Darstellung lediglich eine erste Schaltstange 60 dargestellt, die dem ersten Schaltkupplungspaket 52 zugeordnet ist, sowie eine zweite Schaltstange 62, die dem zweiten Schaltkupplungspaket 54 zugeordnet ist. An der ersten Schaltstange 60 ist ein erstes Schaltglied 64, beispielsweise in der Form einer Schaltgabel, festgelegt, das mit einer Schaltmuffe des ersten Schaltkupplungspaketes 52 in axialer Richtung formschlüssig gekoppelt ist. In entsprechender Weise ist an der zweiten Schaltstange 62 ein zweites Schaltglied 66 festgelegt, das mit einer Schaltmuffe des zweiten Schaltkupplungspaketes 54 axial gekoppelt ist.

Zum axialen Betätigen der ersten Schaltstange 60 ist ein erster Hydraulikzylinder 68 vorgesehen, der koaxial zu der ersten Schaltstange 60 angeordnet ist. Ferner ist zur axialen Betätigung der zweiten Schaltstange 62 ein zweiter Hydraulikzylinder 70 vorgesehen, der koaxial zu der zweiten Schaltstange 62 angeordnet ist. Der erste Hydraulikzylinder 68 und der zweite Hydraulikzylinder 70 sind an einem gemeinsamen Hydraulikzylinderträger 72 festgelegt. Der Hydraulikzylinderträger 72 ist in einem mittleren Bereich des Stufengetriebes 16 angeordnet, insbesondere etwa in der Mitte der Radsatzlänge 44. Der Hydraulikzylinderträger 72 ist vorzugsweise an der Lagerwand 42 festgelegt, vorzugsweise auf einer axialen Seite hiervon. Der Hydraulikzylinderträger 72 mit dem ersten Hydraulikzylinder 68 und dem zweiten Hydraulikzylinder 70 sind Bestandteil einer schematisch angedeuteten Hydraulikanordnung 74.

Die erste Schaltstange 60 ist einer Schaltkupplung des ersten Teilgetriebes 28 zugeordnet. Die zweite Schaltstange 62 ist einer Schaltkupplung des zweiten Teilgetriebes 30 zugeordnet.

Die erste und die zweite Schaltstange 60, 62 erstrecken sich ausgehend von dem Hydraulikzylinderträger 72 in axial entgegengesetzte Richtungen.

Genauer gesagt erstreckt sich die erste Schaltstange 60 ausgehend von dem Hydraulikzylinderträger 72 in einer ersten axialen Richtung 76, und zwar durch die Lagerwand 42 hindurch in Richtung hin zu dem ersten Teilgetriebe 28. Die zweite Schaltstange 62 erstreckt sich in der entgegengesetzten zweiten axialen Richtung 78, und zwar ausgehend von dem Hydraulikzylinderträger 72 in Richtung hin zu dem zweiten Teilgetriebe 30.

Es versteht sich, dass an dem Hydraulikzylinderträger 72 vorzugsweise noch weitere Hydraulikzylinder festgelegt sind, die den Schaltkupplungspaketen 56, 58 zugeordnet sind, und gegebenenfalls einem in Fig. 1 nicht näher bezeichneten Schaltkupplungspaket für die Rückwärtsgangstufe R.

In entsprechender Weise beinhaltet das Kraftfahrzeuggetriebe 16 weitere Schaltstangen, die in Fig. 1 nicht dargestellt sind. Die dem ersten Teilgetriebe 28 zugeordneten Schaltstangen erstrecken sich generell ausgehend von dem Hydraulikzylinderträger 72 in der ersten axialen Richtung 76. Die dem zweiten Teilgetriebe 30 zugeordneten Schaltstangen erstrecken sich ausgehend von dem Hydraulikzylinderträger 72 generell in der zweiten axialen Richtung 78.

Die Hydraulikzylinder 68, 70 sind vorzugsweise jeweils als doppelt wirkende Hydraulikzylinder ausgebildet. Der Hydraulikzylinderträger 72 erstreckt sich vorzugsweise in einer Richtung quer zu der Längsachse 24, und vorzugsweise etwa parallel zu der Lagerwand 42.

In den nachfolgenden Fig. 2 bis 7 sind weitere Ausführungsformen von

Schaltanordnungen dargestellt, die generell hinsichtlich Aufbau und Funktionsweise der in Bezug auf Fig. 1 beschriebenen Schaltanordnung 50 entsprechen, sowie in einem Kraftfahrzeuggetriebe eingebaut werden können, das dem Kraftfahrzeuggetriebe 16 der Fig. 1 entspricht. Gleiche Elemente sind daher durch gleiche Bezugszeichen gekennzeichnet. Im Folgenden werden im Wesentlichen die Unterschiede erläutert.

Fig. 2 zeigt in schematischer Form das Schaltkupplungspaket 52 für die Gangstufen 1 , 3, mit einer nicht näher bezeichneten Schaltmuffe, in die ein erstes Schaltglied 64 in Form einer Schaltgabel greift, die an der ersten Schaltstange 60 festgelegt ist.

Ein erstes axiales Ende 82 der ersten Schaltstange 60 ist in Bezug auf den ersten Hydraulikzylinder 68 festgelegt. Ein entgegengesetztes zweites axiales Ende 84 der ersten Schaltstange 60 ist radial an dem Getriebegehäuse 22 gelagert, derart, dass das zweite axiale Ende 84 axial verschieblich in Bezug auf das Getriebegehäuse 22 ist.

Der erste Hydraulikzylinder 68 weist ein Zylindergehäuse 86 auf, das beispielsweise nach der Art einer Führungsbuchse ausgebildet sein kann, die insbesondere aus Kunststoff hergestellt sein kann. Ferner beinhaltet der Hydraulikzylinder 68 eine Kolbenanordnung 88, die beispielsweise einen nicht näher bezeichneten Kolben aufweist, der innerhalb des Zylindergehäuses 86 axial verschieblich und abgedichtet geführt ist, und eine damit verbundene Kolbenstange aufweist. Das erste axiale Ende 82 der ersten Schaltstange 60 ist mit der Kolbenanordnung 88 des ersten Hydraulikzylinders 68 verbunden, im vorliegenden Fall mit der Kolbenstange hiervon.

Die anderen Schaltstangen des Kraftfahrzeuggetriebes können auf ähnliche Art und Weise mit jeweiligen zugeordneten Hydraulikzylindern 68 verbunden sein.

Der Hydraulikzylinderträger 72 kann als reines Trägerbauteil ausgebildet sein, das keinerlei zusätzliche Funktionen beinhaltet, außer dass die Hydraulikzylinder daran festgelegt sind.

Vorliegend ist der Hydraulikzylinderträger 72 jedoch als Aktuatorgehäuse 92 ausgebildet. Genauer gesagt beinhaltet das Aktuatorgehäuse 92 ein erstes Teilgehäuse 94 und ein zweites Teilgehäuse 96, sowie eine dazwischen angeordnete Zwischenplatte 98.

Die Teilgehäuse 94, 96 und die Zwischenplatte 98 sind nach der Art eines Hydraulikmoduls ausgebildet, wobei zwischen dem ersten Teilgehäuse und der Zwischenplatte und/oder zwischen dem zweiten Teilgehäuse 96 und der Zwischenplatte 98 ein oder mehrere Fluidkanäle 100 ausgebildet sein können, wie es in Fig. 2 schematisch dargestellt ist.

Wenigstens einer der Fluidkanäle 100 ist so ausgebildet, dass er einen Anschluss des Hydraulikzylinders 68 mit einer Außenseite des Aktuatorgehäuses 92 verbindet, so dass an der Außenseite des Aktuatorgehäuses 92 eine Hydraulikleitung angeschlossen sein kann, die beispielsweise mit einem Hydraulikmodul verbindbar ist, das einen Steuerdruck für den Hydraulikzylinder bereitstellt. Vorzugsweise sind die Hydraulikzylinder 68, 70 jeweils als doppelt wirkende Hydraulikzylinder ausgebildet, so dass jedem der Hydraulikzylinder in dem Aktuatorgehäuse 92 vorzugsweise zwei Fluidkanäle 100 zugeordnet sind, um die Kolbenanordnung der Hydraulikzylinder jeweils in beiden axialen Richtungen bewegen zu können.

Das erste Teilgehäuse 94 und das zweite Teilgehäuse 96 sind folglich entlang einer Verbindungsebene 102 miteinander verbunden, die quer zu der Längsachse 24 verläuft und insbesondere mit der Zwischenplatte 98 ausgerichtet ist.

Die Teilgehäuse 94, 96 sind erfindungsgemäß so ausgebildet, dass sie eine Axialöffnung 104 definieren, in die das Zylindergehäuse 86 des Hydraulikzylinders 68 eingesetzt ist. Die Axialöffnung 104 ist teilweise in dem ersten Teilgehäuse 94 ausgebildet, und teilweise in dem zweiten Teilgehäuse 96.

Die Axialöffnung 104 ist erfindungsgemäß an einem Ende, vorliegend im Bereich des zweiten Teilgehäuses 96, mittels eines Stopfens 106 verschlossen. An dem anderen Teilgehäuse ist eine Hydraulikzyiinderausbuchtung 108 vorgesehen, aus der heraus sich die Kolbenanordnung 88 erstreckt.

Die Hydraulikzylinderausbuchtung 108 kann separat von dem Aktuatorgehäuse 92 ausgebildet sein, kann jedoch auch einstückig hiermit verbunden sein. Die Hydraulikzylinderausbuchtung 108 erstreckt sich vorzugsweise durch eine Axialdurchbrechung 110 in der Lagerwand 42.

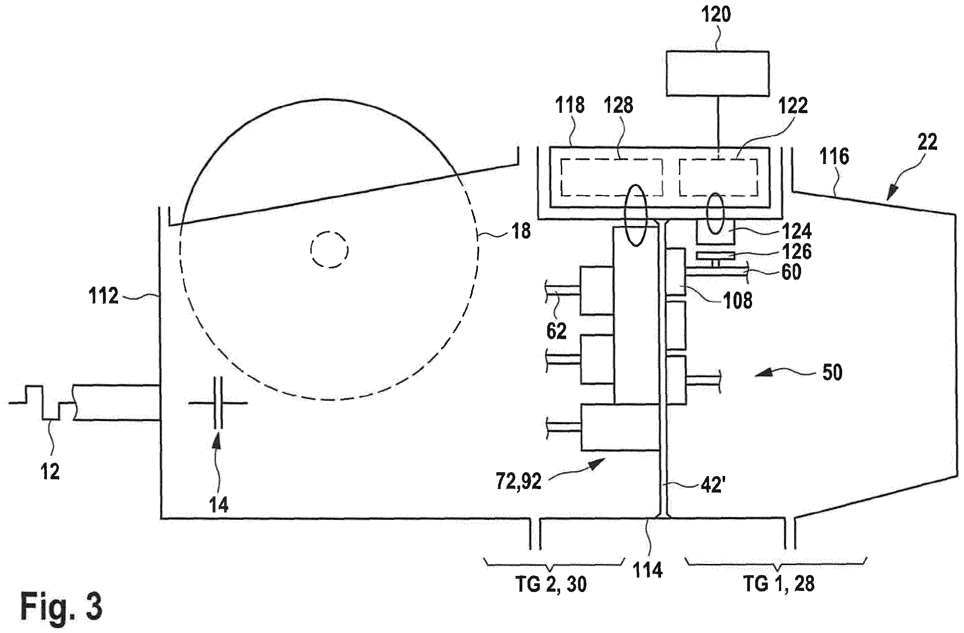

In Fig. 3 ist in schematischer Form ein Antriebsstrang 10 dargestellt, wobei ein Getriebegehäuse 22 vorgesehen ist, das ein Hauptgehäuse 112 aufweist, innerhalb dessen die Kupplungsanordnung 14 aufgenommen ist und an dem der Antriebsmotor 12 anflanschbar ist. Innerhalb des Hauptgehäuses 112 kann ferner das Differential 18 aufgenommen sein.

Das Getriebegehäuse 22 beinhaltet ferner ein am entgegengesetzten axialen Ende vorgesehenes Topfgehäuse 116, wobei zwischen dem Hauptgehäuse 112 und dem Topfgehäuse 1 16 ein Zwischengehäuse 114 angeordnet ist. Das Zwischengehäuse weist in einem axialen mittleren Bereich die Axialwand 42 auf, die in diesem Fall einstückig mit dem Zwischengehäuse 114 ausgebildet sein kann.

An einer Außenseite des Zwischengehäuses 114, vorzugsweise an einer Oberseite hiervon, ist ein Hydraulikmodul 118 festgelegt. Das Hydraulikmodul 118 ist mit einer Steuereinrichtung 120 verbunden, die beispielsweise eine Getriebesteuerung beinhalten kann.

Das Hydraulikmodul 118 beinhaltet einen Elektronikabschnitt 122, der mit der Steuereinrichtung 120 verbunden ist. Ferner ist der Elektronikabschnitt 122 vorzugsweise mit einem Hall-Sensor 124 verbunden, der im Inneren des Getriebegehäuses 22 so angeordnet ist, dass er einen mit der ersten Schaltstange 60 verbundenen Magneten 126 hinsichtlich der Position der Schaltstange 60 überwachen bzw. detektieren kann. Es versteht sich, dass für die anderen Schaltstangen in gleicherweise Magnete und zugeordnete Hall-Sensoren vorgesehen sein können.

Das Hydraulikmodul 118 beinhaltet ferner eine Ventilanordnung 128, die Teil einer Fluidversorgungseinrichtung sein kann. Die Fluidversorgungseinrichtung beinhaltet ferner in der Regel eine Pumpenanordnung, die vorliegend aus Gründen einer übersichtlicheren Darstellung nicht gezeigt ist.

Die Ventilanordnung 128 ist mit dem Aktuatorgehäuse 92 derart verbunden, dass Ausgänge der Ventilanordnung 128 mit Fluidkanälen in dem Aktuatorgehäuse 92 verbunden sind. Hierzu können Kanäle durch eine Außenwand des Zwischengehäuses 114 hindurch verlaufen.

Das Hydraulikmodul 118 ist vorzugsweise so an dem Getriebegehäuse 22 angeordnet, dass es sich in axialer Richtung mit dem Aktuatorgehäuse 92 axial überschneidet, so dass die Verbindungen zwischen dem Hydraulikmodul 118 und dem Aktuatorgehäuse 92 kurz und robust ausgestaltet werden können.

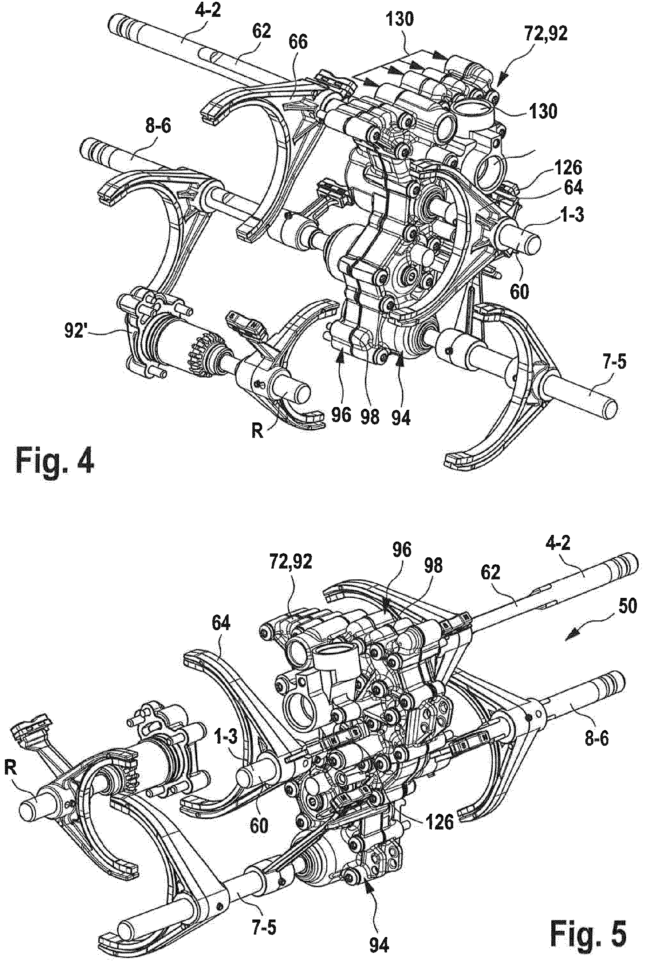

In den Fig. 4 und 5 ist eine weitere Ausführungsform einer Schaltanordnung gezeigt, bei der an einem Aktuatorgehäuse 92 vier Hydraulikzylinder festgelegt sind, die koaxial mit jeweiligen Schaltstangen verbunden sind. In Fig. 4 sind dabei die erste Schaltstange 60 und die zweite Schaltstange 62 mit den zugeordneten Schaltgliedern 64, 66 gezeigt.

Ferner sind in den Fig. 4 und 5 weitere Schaltstangen für die Gangstufen 7-5 bzw. 8-6 gezeigt, die jeweils ebenfalls mit zugeordneten Schaltgliedern verbunden sind.

Ferner ist den Fig. 4 und 5 ein separates Aktuatorgehäuse 92' vorgesehen, an dem nur ein Hydraulikzylinder festgelegt ist, der der Rückwärtsgangstufe R zugeordnet ist.

In den Fig. 4 und 5 sind ferner schematisch axiale Anschlüsse 130 vom Zwischengehäuse 114 dargestellt, über die nicht näher dargestellte Fluidkanäle 100 im Inneren des Aktuatorgehäuses 92 mit den zugeordneten Hydraulikzylindern verbunden werden können.

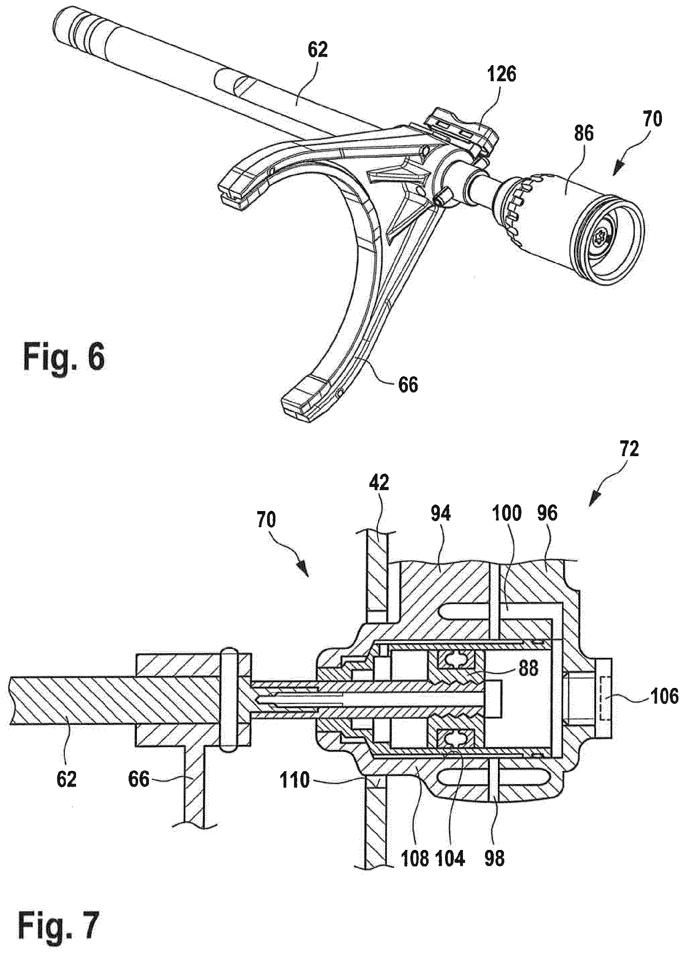

Fig. 6 zeigt eine Anordnung aus einer Schaltstange 62, an der ein Magnet 126 festgelegt ist, und an der ein Schaltglied 66 festgelegt ist. Ferner ist die Schaltstange 62 koaxial zu einem Hydraulikzylinder 70 angeordnet, der ein Zylindergehäuse 86 aufweist, das in ein Aktuatorgehäuse 92 einsetzbar ist.

Fig. 7 zeigt eine schematische Längsschnittansicht durch eine solche Anordnung, wobei die Teilgehäuse 94, 96 und die Zwischen platte 98 des Aktuatorgehäuses 92 gezeigt sind, und die Kolbenanordnung in dem Hydraulikzylinder 70, die über eine nicht näher bezeichnete Schraubverbindung mit der Schaltstange 62 verbunden ist.

In Fig. 7 ist ferner der Stopfen 106 zu sehen, der einen Zylinderinnenraum des Hydraulikzylinders 70 abschließt.

## Patentansprüche

1. Schaltanordnung (50) für ein Kraftfahrzeuggetriebe (16), mit einem Gehäuse (22), das eine Längsachse (24) definiert;
wenigstens einer ersten und einer zweiten Schaltstange (60, 62), die zum Ein- und Auslegen von jeweiligen zugeordneten Gangstufen (1-3, 2-4) axial verschieblich in Bezug auf das Gehäuse (22) gelagert sind; und
einer Hydraulikanordnung (74), die wenigstens einen ersten und einen zweiten Hydraulikzylinder (68, 70) aufweist, wobei der erste Hydraulikzylinder (68) dazu ausgelegt ist, die erste Schaltstange (60) in wenigstens einer axialen Richtung (76, 78) axial zu verschieben, wobei der zweite Hydraulikzylinder (70) dazu ausgelegt ist, die zweite Schaltstange (62) in wenigstens einer axialen Richtung (76, 78) axial zu verschieben, wobei der erste und der zweite Hydraulikzylinder (68, 70) an einem gemeinsamen Hydraulikzylinderträger (72) festgelegt sind und jeweils eine Kolbenanordnung (88) beinhalten und ein Zylindergehäuse (86) aufweisen; und
der erste und der zweite Hydraulikzylinder mit den zugeordneten Schaltstangen (60, 62) derart verbunden sind, dass sich die erste und die zweite Schaltstange (60, 62) ausgehend von dem Hydraulikzylinderträger (72) ausschließlich in entgegengesetzte Richtungen (76, 78) erstrecken,
**dadurch gekennzeichnet, dass** der Hydraulikzylinderträger (72) als Aktuatorgehäuse (92) ausgebildet ist, das ein erstes Teilgehäuse (94) und ein zweites Teilgehäuse (96) aufweist, die über eine Verbindungsebene (102) miteinander verbunden sind, die quer zu der Längsachse (24) ausgerichtet ist und die Teilgehäuse (94, 96) so ausgebildet sind, dass sie eine Axialöffnung (104) definieren, in die das Zylindergehäuse (86) des Hydraulikzylinders (68) eingesetzt ist, wobei die Axialöffnung (104) teilweise in dem ersten Teilgehäuse (94) ausgebildet ist, und teilweise in dem zweiten Teilgehäuse (96) und die Axialöffnung (104) an einem Ende, vorliegend im Bereich des zweiten Teilgehäuses (96), mittels eines Stopfens (106) verschlossen ist und an dem anderen Teilgehäuse eine Hydraulikzylinderausbuchtung (108) vorgesehen ist, aus der heraus sich eine Kolbenanordnung (88) erstreckt.

2. Schaltanordnung nach Anspruch 1, **dadurch gekennzeichnet, dass** der Hydraulikzylinderträger (72) dazu ausgebildet ist, in einem Getriebegehäuse (22) des Fahrzeuggetriebes (16) befestigt zu werden.

3. Schaltanordnung nach Anspruch 1 oder 2, **dadurch gekennzeichnet, dass** die erste und die zweite Schaltstange (60, 62) jeweils zwei axiale Enden (82, 84) aufweisen und jeweils im Bereich von einem (82) ihrer axialen Enden (82, 84) fest mit einer Kolbenanordnung (88) ihres zugeordneten Hydraulikzylinders (68) verbunden sind, wobei die erste und die zweite Schaltstange (60, 62) im Bereich ihres jeweiligen anderen axialen Endes (84) dazu ausgebildet sind, um an einem Getriebegehäuse (22) radial fest und axial verschieblich gelagert zu werden.

4. Schaltanordnung nach einem der Ansprüche 1 - 3, **dadurch gekennzeichnet, dass** der Hydraulikzylinderträger (72) als Aktuatorgehäuse (92) ausgebildet ist, das wenigstens einen Fluidkanal (100) aufweist, der im Inneren des Aktuatorgehäuses (92) mit einem Anschluss des ersten und/oder des zweiten Hydraulikzylinders verbunden ist und der außen an dem Aktuatorgehäuse (92) mit einer Fluidversorgungseinrichtung (128) der Hydraulikanordnung (74) verbindbar ist.

5. Schaltanordnung nach Anspruch 1, **dadurch gekennzeichnet, dass** zwischen dem ersten und dem zweiten Teilgehäuse (94, 96) zumindest abschnittweise eine Zwischenplatte (98) angeordnet ist, wobei das erste und/oder das zweite Teilgehäuse (94, 96) und die Zwischenplatte (98) so ausgebildet sind, dass zwischen dem ersten Teilgehäuse (94) und der Zwischenplatte (98) und/oder zwischen dem zweiten Teilgehäuse (96) und der Zwischenplatte (98) wenigstens ein Fluidkanal (100) ausgebildet ist.

6. Schaltanordnung nach einem der Ansprüche 1 - 5, **dadurch gekennzeichnet, dass** der Hydraulikzylinderträger (72) aus Metallgussmaterial hergestellt ist, wobei der erste und/oder der zweite Hydraulikzylinder (68, 70) vorzugsweise eine Führungsbuchse (86) aus einem Kunststoffmaterial aufweist, die in eine Axialöffnung (104) in dem Hydraulikzylinderträger (72) eingesetzt ist.

7. Schaltanordnung nach einem der Ansprüche 1 - 6, **dadurch gekennzeichnet, dass** die Hydraulikanordnung (74) ein Hydraulikmodul (118) aufweist, an dem eine Ventilanordnung zum Erzeugen eines Steuerdruckes für den ersten und/oder den zweiten Hydraulikzylinder ausgebildet ist, wobei das Hydraulikmodul (118) sich in axialer Richtung zumindest teilweise mit dem Hydraulikzylinderträger (72) überschneidet.

8. Fahrzeuggetriebe (16) mit einem Getriebegehäuse (22) und mit einer Mehrzahl von darin angeordneten Radsätzen, die sich insgesamt über eine Radsatzlänge (44) erstrecken, und mit einer Schaltanordnung (50) nach einem der Ansprüche 1 - 7, wobei der erste und der zweite Hydraulikzylinder (68, 70) koaxial zu ihrer jeweiligen Schaltstange (60, 62) angeordnet sind und wobei der Hydraulikzylinderträger (72) axial gesehen etwa in der Mitte der Radsatzlänge (44) angeordnet ist.

9. Fahrzeuggetriebe (16) mit einem Getriebegehäuse (22), mit wenigstens zwei axial versetzt angeordneten Radsätzen zum Ein- und Auslegen von Gangstufen (1-8) und mit einer Schaltanordnung (50) nach einem der Ansprüche 1 - 7.

10. Fahrzeuggetriebe nach Anspruch 8 oder 9, wobei das Getriebegehäuse (22) eine sich quer zu der Längsachse erstreckende Lagerwand (42) aufweist, an der der Hydraulikzylinderträger (72) festgelegt ist.

11. Fahrzeuggetriebe nach einem der Ansprüche 8 - 10 , wobei das Fahrzeuggetriebe (16) ein Doppelkupplungstriebe mit einem ersten Teilgetriebe (28), das ungerade Gangstufen beinhaltet, und mit einem zweiten Teilgetriebe (30) ist, das gerade Gangstufen beinhaltet, wobei der Hydraulikzylinderträger (72) axial zwischen den zwei Teilgetrieben (28, 30) angeordnet ist.

## Claims

1. Shift assembly (50) for a motor vehicle transmission (16), having a housing (22) which defines a longitudinal axis (24);
at least one first and one second shift rod (60, 62) which are mounted so as to be axially displaceable relative to the housing (22) for the purposes of engaging and disengaging respective associated gear stages (1-3, 2-4); and
a hydraulic assembly (74) which has at least one first and one second hydraulic cylinder (68, 70), wherein the first hydraulic cylinder (68) is configured to axially displace the first shift rod (60) in at least one axial direction (76, 78), wherein the second hydraulic cylinder (70) is configured to axially displace the second shift rod (62) in at least one axial direction (76, 78), wherein the first and the second hydraulic cylinder (68, 70) are fixed to a common hydraulic cylinder carrier (72) and comprise in each case one piston assembly (88) and have a cylinder housing (86); and
the first and the second hydraulic cylinder are connected to the associated shift rods (60, 62) such that the first and the second shift rod (60, 62) extend from the hydraulic cylinder carrier (72) exclusively in opposite directions (76, 78),
**characterized in that** the hydraulic cylinder carrier (72) is configured as an actuator housing (92) which has a first housing part (94) and a second housing part (96) which are connected to one another across a connecting plane (102) that is oriented transversely with respect to the longitudinal axis (24), and the housing parts (94, 96) are configured such that they define an axial opening (104) into which the cylinder housing (86) of the hydraulic cylinder (68) is inserted, wherein the axial opening (104) is formed partially in the first housing part (94) and partially in the second housing part (96), and the axial opening (104) is closed off by means of a plug (106) at one end, in the present case in the region of the second housing part (96), and a hydraulic cylinder protuberance (108) out of which a piston assembly (88) extends is provided on the other housing part.

2. Shift assembly according to Claim 1, **characterized in that** the hydraulic cylinder carrier (72) is configured to be fastened in a transmission housing (22) of the vehicle transmission (16).

3. Shift assembly according to Claim 1 or 2, **characterized in that** the first and the second shift rod (60, 62) each have two axial ends (82, 84) and are each fixedly connected, in the region of one (82) of their axial ends (82, 84), to a piston assembly (88) of their associated hydraulic cylinder (68), wherein the first and the second shift rod (60, 62) are configured, in the region of their respective other axial end (84), to be mounted radially fixedly and axially displaceably on a transmission housing (22).

4. Shift assembly according to any one of Claims 1 - 3, **characterized in that** the hydraulic cylinder carrier (72) is configured as an actuator housing (92) which has at least one fluid channel (100), which at least one fluid channel is connected in the interior of the actuator housing (92) to a connection of the first and/or of the second hydraulic cylinder and is connectable on the outside of the actuator housing (92) to a fluid supply device (128) of the hydraulic assembly (74).

5. Shift assembly according to Claim 1, **characterized in that** an intermediate plate (98) is arranged at least in certain sections between the first and the second housing part (94, 96), wherein the first and/or the second housing part (94, 96) and the intermediate plate (98) are configured such that at least one fluid channel (100) is formed between the first housing part (94) and the intermediate plate (98) and/or between the second housing part (96) and the intermediate plate (98).

6. Shift assembly according to any one of Claims 1 - 5, **characterized in that** the hydraulic cylinder carrier (72) is produced from cast metal material, wherein the first and/or the second hydraulic cylinder (68, 70) preferably has a guide bushing (86) which is composed of a plastics material and which is inserted into an axial opening (104) in the hydraulic cylinder carrier (72).

7. Shift assembly according to any one of Claims 1 - 6, **characterized in that** the hydraulic assembly (74) has a hydraulic module (118) on which there is formed a valve assembly for generating a control pressure for the first and/or the second hydraulic cylinder, wherein the hydraulic module (118) at least partially overlaps the hydraulic cylinder carrier (72) in an axial direction.

8. Vehicle transmission (16) having a transmission housing (22) and having a multiplicity of gearwheel sets which are arranged therein and which collectively extend over a gearwheel set length (44), and having a shift assembly (50) according to any one of Claims 1 - 7, wherein the first and the second hydraulic cylinder (68, 70) are arranged coaxially with respect to their respective shift rod (60, 62), and wherein the hydraulic cylinder carrier (72) is arranged approximately in the middle of the gearwheel set length (44) as viewed axially.

9. Vehicle transmission (16) having a transmission housing (22), having at least two gearwheel sets which are arranged so as to be offset axially and which serve for the engagement and disengagement of gear stages (1-8), and having a shift assembly (50) according to any one of Claims 1 - 7.

10. Vehicle transmission according to Claim 8 or 9, wherein the transmission housing (22) has a bearing wall (42) which extends transversely with respect to the longitudinal axis and to which the hydraulic cylinder carrier (72) is fixed.

11. Vehicle transmission according to any one of Claims 8 - 10, wherein the vehicle transmission (16) is a dual clutch transmission having a first partial transmission (28), which comprises odd-numbered gear stages, and having a second partial transmission (30), which comprises even-numbered gear stages, wherein the hydraulic cylinder carrier (72) is arranged axially between the two partial transmissions (28, 30).

## Revendications

1. Dispositif de changement de vitesse (50) pour une transmission de véhicule automobile (16), comprenant un carter (22) qui définit un axe longitudinal (24) ;
au moins une première et une deuxième tringle de changement de vitesse (60, 62), qui sont montées de manière à pouvoir coulisser axialement par rapport au carter (22) pour engager et désengager des rapports de vitesse associés respectifs (1-3, 2-4) ; et
un dispositif hydraulique (74), qui présente au moins un premier et un deuxième vérin hydraulique (68, 70), le premier vérin hydraulique (68) étant adapté pour amener la première tringle de changement de vitesse (60) à coulisser axialement dans au moins une direction axiale (76, 78), le deuxième vérin hydraulique (70) étant adapté pour amener la deuxième tringle de changement de vitesse (62) à coulisser axialement dans au moins une direction axiale (76, 78), le premier et le deuxième vérin hydraulique (68, 70) étant fixés à un support de vérin hydraulique commun (72) et contenant chacun un dispositif de piston (88) et présentant un carter de vérin (86) ; et
le premier et le deuxième vérin hydraulique étant reliés aux tringles de changement de vitesse associées (60, 62) de telle sorte que la première et la deuxième tringle de changement de vitesse (60, 62) s'étendent exclusivement dans des directions opposées (76, 78) à partir du support de vérin hydraulique (72),
**caractérisé en ce que** le support de vérin hydraulique (72) est réalisé sous forme de carter d'actionneur (92), qui présente un premier carter partiel (94) et un deuxième carter partiel (96), qui sont reliés entre eux par l'intermédiaire d'un plan de liaison (102) qui est orienté transversalement à l'axe longitudinal (24), et les carters partiels (94, 96) sont réalisés de telle sorte qu'ils définissent une ouverture axiale (104), dans laquelle est inséré le carter de vérin (86) du vérin hydraulique (68), l'ouverture axiale (104) étant réalisée en partie dans le premier carter partiel (94) et en partie dans le deuxième carter partiel (96) et l'ouverture axiale (104) étant fermée à une extrémité, présente dans la zone du deuxième carter partiel (96), au moyen d'un bouchon (106) et un renflement de vérin hydraulique (108) à partir duquel s'étend un dispositif de piston (88) étant prévu sur l'autre carter partiel.

2. Dispositif de changement de vitesse selon la revendication 1, **caractérisé en ce que** le support de vérin hydraulique (72) est réalisé pour être fixé dans un carter de transmission (22) de la transmission de véhicule (16).

3. Dispositif de changement de vitesse selon la revendication 1 ou 2, **caractérisé en ce que** la première et la deuxième tringle de changement de vitesse (60, 62) présentent chacune deux extrémités axiales (82, 84) et sont chacune reliées, dans la zone de l'une (82) de leurs extrémités axiales (82, 84), de manière fixe à un dispositif de piston (88) de leur vérin hydraulique associé (68), la première et la deuxième tringle de changement de vitesse (60, 62) étant réalisées, dans la zone de leur autre extrémité axiale respective (84), pour être montées de manière fixe radialement et de manière à pouvoir coulisser axialement sur un carter de transmission (22).

4. Dispositif de changement de vitesse selon l'une quelconque des revendications 1 à 3, **caractérisé en ce que** le support de vérin hydraulique (72) est réalisé sous forme de carter d'actionneur (92) qui présente au moins un canal de fluide (100), qui est relié à l'intérieur du carter d'actionneur (92) à un raccord du premier et/ou du deuxième vérin hydraulique et qui peut être relié à l'extérieur du carter d'actionneur (92) à un appareil d'alimentation en fluide (128) du dispositif hydraulique (74).

5. Dispositif de changement de vitesse selon la revendication 1, **caractérisé en ce qu'**une plaque intermédiaire (98) est agencée au moins par sections entre le premier et le deuxième carter partiel (94, 96), le premier et/ou le deuxième carter partiel (94, 96) et la plaque intermédiaire (98) étant réalisés de telle sorte qu'au moins un canal de fluide (100) est réalisé entre le premier carter partiel (94) et la plaque intermédiaire (98) et/ou entre le deuxième carter partiel (96) et la plaque intermédiaire (98).

6. Dispositif de changement de vitesse selon l'une quelconque des revendications 1 à 5, **caractérisé en ce que** le support de vérin hydraulique (72) est fabriqué en matériau de moulage métallique, le premier et/ou le deuxième vérin hydraulique (68, 70) présentant de préférence un manchon de guidage (86) en une matière plastique, qui est inséré dans une ouverture axiale (104) dans le support de vérin hydraulique (72).

7. Dispositif de changement de vitesse selon l'une quelconque des revendications 1 à 6, **caractérisé en ce que** le dispositif hydraulique (74) présente un module hydraulique (118), sur lequel est réalisé un dispositif de soupape pour générer une pression de commande pour le premier et/ou le deuxième vérin hydraulique, le module hydraulique (118) s'imbriquant au moins partiellement dans le support de vérin hydraulique (72) dans la direction axiale.

8. Transmission de véhicule (16) comprenant un carter de transmission (22) et comprenant une pluralité d'essieux agencés dans celui-ci, qui s'étendent au total sur une longueur d'essieu (44), et comprenant un dispositif de changement de vitesse (50) selon l'une quelconque des revendications 1 à 7, le premier et le deuxième vérin hydraulique (68, 70) étant agencés coaxialement à leur tringle de changement de vitesse respective (60, 62) et le support de vérin hydraulique (72) étant agencé, tel que vu axialement, environ au milieu de la longueur d'essieu (44).

9. Transmission de véhicule (16) comprenant un carter de transmission (22), comprenant au moins deux essieux agencés de manière décalée axialement pour engager et désengager des rapports de vitesse (1-8) et comprenant un dispositif de changement de vitesse (50) selon l'une quelconque des revendications 1 à 7.

10. Transmission de véhicule selon la revendication 8 ou 9, dans laquelle le carter de transmission (22) présente une paroi de palier (42) s'étendant transversalement à l'axe longitudinal, sur laquelle est fixé le support de vérin hydraulique (72).

11. Transmission de véhicule selon l'une quelconque des revendications 8 à 10, la transmission de véhicule (16) étant une transmission à double embrayage comprenant une première transmission partielle (28), qui contient des rapports de vitesse impairs, et comprenant une deuxième transmission partielle (30), qui contient des rapports de vitesse pairs, le support de vérin hydraulique (72) étant agencé axialement entre les deux transmissions partielles (28, 30).
